# EUROPÄISCHE PATENTSCHRIFT

(11) **EP 0 556 667 B1**
(45) Veröffentlichungstag und Bekanntmachung des Hinweises auf die Patenterteilung: **12.07.1995**
(21) Anmeldenummer: 93101816.2
(22) Anmeldetag: 05.02.1993
(51) Int. Cl.: B62D 25/08, B60R 19/26, B60R 19/34, F16F 7/14

(54) **Stossverzehrvorrichtung**
Energy absorbing device
Dispositif d'absorption d'énergie

(30) Priorität: 19.02.1992 DE 4205032
(43) Veröffentlichungstag der Anmeldung: 25.08.1993
(73) Patentinhaber: Austria Metall Aktiengesellschaft, A-5282 Braunau am Inn (AT)
(72) Erfinder: Garnweidner, Peter, A-5112 Lamprechtshausen 429a (AT)
(74) Vertreter: WILHELMS, KILIAN & PARTNER Patentanwälte

(56) Entgegenhaltungen:
- EP-A- 0 252 031
- EP-A- 0 486 058
- DE-A- 1 963 335
- FR-A- 2 129 258
- US-A- 3 718 326
- US-A- 3 747 969

## Beschreibung

Die Erfindung betrifft eine Stoßverzehrvorrichtung zum Schützen eines Bauteils, insbesondere des Rahmens eines Fahrzeuges vor einem anliegenden Stoß nach dem Gattungsbegriff des Patentanspruchs 1. Eine derartige Stoßverzehrvorrichtung ist aus der DE-OS 27 38 965 bekannt.

Stoßverzehrvorrichtungen für Fahrzeuge dienen im allgemeinen dazu, die bei einer Kollision entstehenden Aufprall- oder Stoßkräfte aufzunehmen und zu absorbieren, um eine Verformung des Fahrzeugrahmens zu vermeiden oder so gering wie möglich zu halten und dadurch die Insassen des Fahrzeuges nicht zu gefährden. Dazu ist es bei Kraftfahrzeugen üblich, Stoßverzehrvorrichtungen zwischen der Stoßstange und dem Fahrzeugrahmen anzuordnen. Bei der aus der DE-OS 27 38 965 bekannten Stoßverzehrvorrichtung ist das den Stoß aufnehmende Profilteil als Innenprofilteil ausgebildet, das in einem in Form eines Hülsenflansches ausgebildeten Außenprofilteil sitzt, das mit dem Fahrzeugrahmen fest verbunden ist. Im Innenprofilteil sind Längsbohrungen vorgesehen, in denen ein Stift sitzt, der fest mit dem Außenprofilteil verbunden ist. Das Zugbandprofil führt um diesen Stift sowie um einen weiteren Stift, der in Stoßrichtung am vorderen Ende des Innenprofilteils angebracht ist.

Wenn bei dieser bekannten Stoßverzehrvorrichtung ein Stoß am Innenprofilteil liegt, verschiebt sich dieses in Stoßrichtung im Hülsenflansch. Dabei wandert der Stift, der fest mit dem Hülsenflansch verbunden ist, entlang der Längsbohrung des Innenprofilteils, an dem der Stoß liegt, und wird das Zugbandprofilteil gedehnt, so daß es die Stoßenergie absorbiert.

Bei der bekannten Stoßverzehrvorrichtung ist somit der eigentliche Stoßverzehrkörper, d.h. das Innenprofilteil mit dem darin angeordneten Zugbandprofilteil, mittels eines Hülsenflansches am Fahrzeugrahmen gehalten. Da die Kraft letztendlich jedoch in den Fahrzeuglängsträger des Rahmens eingeleitet werden soll, wäre es zur Vermeidung von unnötigen Biegeelementen günstiger, die Stoßverzehrbauelemente direkt in den Fahrzeuglängsträgern einbauen zu können. Das wäre bei dem Aufbau der bekannten Stoßverzehrvorrichtung jedoch nicht möglich, da dann, wenn statt des Hülsenflansches der Fahrzeuglängsträger verwandt würde, die Krafteinleitung über einen Stift ungünstig wäre. Die Stoßverzehrbauelemente sollten im Einsatzfall nämlich eine Kraft an den Fahrzeuglängsträger übertragen, deren Höhe knapp unter dem Niveau liegen sollte, bei dem sich der Fahrzeuglängsträger verformt. Im Berührungsbereich zwischen einem Stift und einem Fahrzeuglängsträger käme es aufgrund des geringen Durchmessers eines Stiftes und der im Vergleich mit der Wandstärke des Hülsenflansches wesentlich geringeren Wandstärke eines üblichen Fahrzeuglängsträgers zu großen Flächenpressungen. Der Fahrzeuglängsträger würde durch den Stift daher aufgerissen. Es ist allerdings auch nicht möglich, den Durchmesser des Stiftes zu erhöhen, da dadurch sowohl der Fahrzeuglängsträger als auch das Innenprofil zu sehr geschwächt würden.

Da es darüberhinaus während eines Unfalls notwendig ist, daß das Fahrzeug seine Geschwindigkeit über die gesamte Kollisionsabfolge vermindert, um die Insassen möglichst wenig zu belasten, müssen die Festigkeitsreserven der Rahmenkonstruktion des Fahrzeugs voll ausgenutzt werden. Das bedeutet, daß der Verformungswiderstand am Anfang der Kollision möglichst hoch sein soll, um eine bestmögliche Verformungsarbeit zu leisten. Es sollte daher eine möglichst konstante Kraft über den Kollisionsverlauf gegeben sein.

Die der Erfindung zugrundeliegende Aufgabe besteht darin, eine Stoßverzehrvorrichtung nach dem Gattungsbegriff des Patentanspruchs 1 zu schaffen, die direkt in den Fahrzeuglängsträger des Rahmens eines Fahrzeuges eingebaut werden kann.

Die erfindungsgemäße Vorrichtung soll insbesondere den genannten Anforderungen genügen und dennoch einfach zu fertigen und ohne zusätzlichen Montageaufwand an dem zu schützenden Bauteil, d.h. insbesondere am Fahrzeugrahmen, anzubringen sein.

Diese Aufgabe wird gemäß der Erfindung durch die Ausbildung gelöst, die im Kennzeichen des Patentanspruchs 1 angegeben ist.

Gemäß der Erfindung ist somit ein Innenprofilteil vorgesehen, welches das Zugbandprofilteil an den beiden Befestigungspunkten starr mit dem vor dem Stoß zu schützenden Bauteil, beispielsweise dem Fahrzeuglängsträger, verbindet. Durch die zwei Befestigungspunkte am Fahrzeuglängsträger wird erreicht, daß auch ein Stoß, der nicht genau in axialer Richtung am Fahrzeuglängsträger liegt, sondern eine gewisse seitliche Komponente hat, in der gewünschten Weise aufgefangen wird. Das ist bei der Ausbildung eines Hülsenflansches als Außenprofilteil, in dem ein Innenprofilteil angeordnet ist, an dem der aufzufangende Stoß liegt, wie es bei der aus der DE-OS 27 38 965 bekannten Vorrichtung der Fall ist, nicht möglich, da bei einem seitlich kommenden Stoß das Innenprofilteil, an dem der Stoß liegt, zusammen mit seiner Verankerung am Fahrzeugrahmen, d.h. dem Hülsenflansch, gedreht werden würde.

Die erfindungsgemäße Stoßverzehrvorrichtung kommt darüberhinaus mit den ohnehin erforderlichen Verschraubungen quer zu dem zu schützenden Bauteil, beispielsweise zum Längsträger eines Kraftfahrzeugrahmens, aus, so daß kein zusätzlicher Montageaufwand betrieben werden muß.

Besonders bevorzugte Ausgestaltungen und Weiterbildungen der erfindungsgemäßen Stoßverzehrvorrichtung sind Gegenstand der Patentansprüche 2 bis 14.

Da die erfindungsgemäße Vorrichtung ihre Funktion erfüllt, ohne daß die Absorption der Stoßenergie über eine Reibineingriffnahme zwischen zwei Bauteilen erfolgt, hat sie weiterhin den Vorteil, daß sie von Änderungen des Reibungswiderstandes zwischen derartigen in Reibineingriffnahme stehenden Bauteilen unabhängig ist.

Durch die Ausbildung der Montageschrauben derart, daß ihr Durchmesser kleiner als der Innendurchmesser der Schraubenaufnahmebohrungen im Innenprofilteil bzw. der Distanzhülsen ist, ist darüberhinaus gewährleistet, daß die Vorrichtung in Längsrichtung, d.h. in Stoßrichtung einstellbar ist, so daß Rohbauteiltoleranzen ausgeglichen werden können.

Vorzugsweise ist die erfindungsgemäße Vorrichtung so ausgebildet, daß der Kraftanstieg zu Beginn eines Stoßverzehrvorganges sehr steil ist, indem dafür gesorgt ist, daß am Anfang der Kraft-Weg-Kennlinie zusätzlich zu der Dehnung des Zugbandprofilteils weitere Widerstände überwunden werden müssen.

Die erfindungsgemäße Vorrichtung kommt schließlich mit kleinen Einbauräumen aus.

Im folgenden werden anhand der zugehörigen Zeichnung besonders bevorzugte Ausführungsbeispiele der Erfindung näher beschrieben. Es zeigen
Fig. 1 eine Längsschnittansicht eines Ausführungsbeispiels der erfindungsgemäßen Stoßverzehrvorrichtung im unbelasteten Zustand,
Fig. 2 eine Schnittansicht längs der Linie B-B in Fig. 1,
Fig. 3 eine Draufsicht längs des Pfeiles C in Fig. 1 auf das Außenprofil, d.h. ohne Fahrzeuglängsträger,
Fig. 4 in einer Fig. 1 entsprechenden Schnittansicht das Ausführungsbeispiel der erfindungsgemäßen Stoßverzehrvorrichtung im belasteten Zustand, d.h. nach einem anliegenden Stoß,
Fig. 5 eine Schnittansicht längs der Linie A-A in Fig. 4, und
Fig. 6 eine Schnittansicht eines weiteren Ausführungsbeispiels der Erfindung im unbelasteten und im belasteten Zustand jeweils,
Fig. 7 das Zugbandprofilteil, bei dem in Fig. 6 dargestellten Ausführungsbeispiel in einer Seitenansicht und einer Draufsicht, und
Fig. 8 in einer perspektivischen Ansicht noch ein Ausführungsbeispiel der erfindungsgemäßen Vorrichtung.

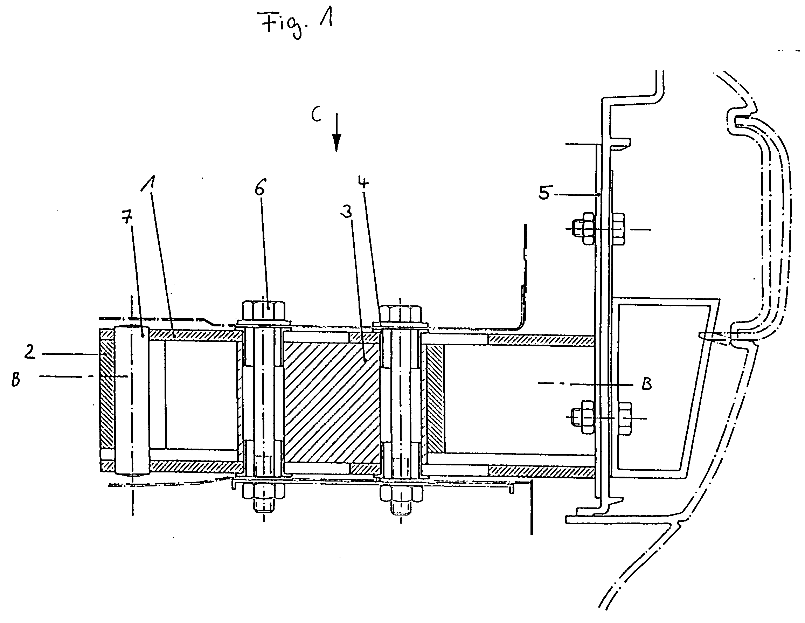

In den Fig. 1 bis 3 ist ein Ausführungsbeispiel der erfindungsgemäßen Stoßverzehrvorrichtung dargestellt, das dazu dient, den Rahmen eines Kraftfahrzeuges vor einem anliegenden Stoß zu schützen. Eine derartige Stoßverzehrvorrichtung ist zwischen der in der Zeichnung nur schematisch und gestrichelt dargestellten Stoßstange und dem Fahrzeugrahmen angeordnet. Die Fig. 1 bis 3 zeigen das Ausführungsbeispiel der erfindungsgemäßen Stoßverzehrvorrichtung im unbelasteten Zustand, d.h. ohne anliegenden Stoß.

Wie es insbesondere in Fig. 1 dargestellt ist, besteht die Stoßverzehrvorrichtung im wesentlichen aus einem Außenprofilteil 1, das fest, beispielsweise durch Schweißen, mit einer Montageplatte 5 verbunden ist, an der die Stoßstange oder der Stoßfänger über Schrauben oder Nieten angebracht ist. Ein am Stoßfänger oder an der Stoßstange liegender Stoß wird daher über die Montageplatte 5 auf das Außenprofilteil 1 übertragen.

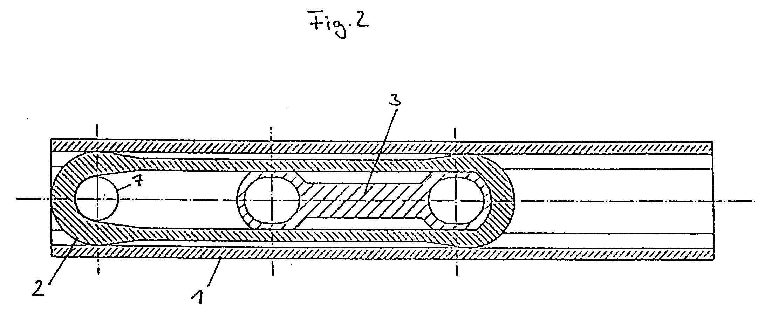

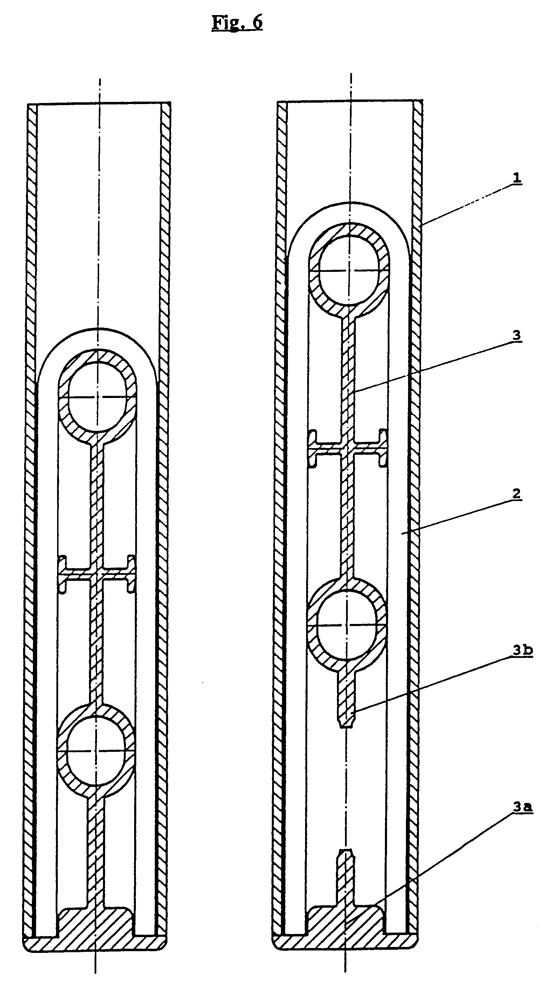

Wie es insbesondere in Fig. 2 dargestellt ist, sind im Außenprofilteil 1 ein Innenprofilteil 3 und ein Zugbandprofilteil 2 vorgesehen. Das Zugbandprofilteil 2 ist an seinem in Stoßrichtung vorderen Ende in Stoßrichtung fest mit dem Außenprofilteil 1 verbunden, was gemäß Fig. 1 und 2 über einen Bolzen 7 erreicht werden kann, der fest im Außenprofilteil 1 angebracht ist und um den dieses Ende des Zugbandprofilteils 2 führt. Es ist aber auch möglich, dieses Ende des Zugbandprofilteils 2 so auszubilden, daß es fest mit dem Außenprofilteil 1 verbunden werden kann, wie es beispielsweise in Fig. 6 dargestellt ist.

Das Zugbandprofilteil 2 verläuft in Stoßrichtung nach hinten parallel zu den Seitenwänden des Außenprofilteils 1 und um das Innenprofilteil 3 herum, so daß das Innenprofilteil 3 im in Stoßrichtung hinteren Ende des Zugbandprofilteils 2 aufgenommen ist, wie es in insbesondere in Fig. 2 dargestellt ist.

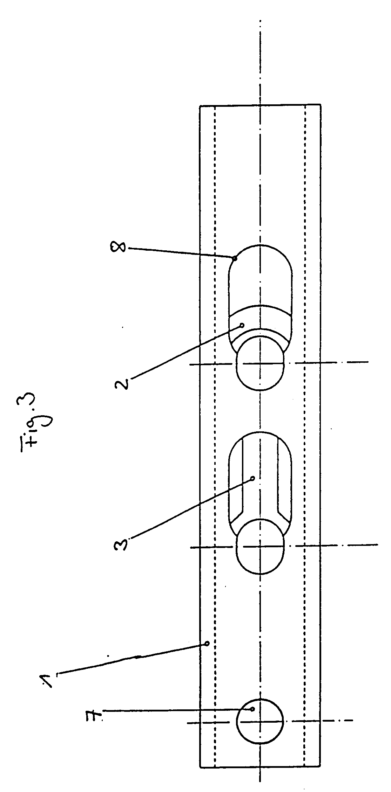

Wie es in Fig. 3 dargestellt ist, ist daß Außenprofilteil 1 mit Langlöchern 8 versehen. Das Innenprofilteil 3 weist zwei in Stoßrichtung hintereinander und im Abstand voneinander liegende Schraubenaufnahmebohrungen auf und ist somit an zwei entsprechenden Stellen mit dem Längsträger des Fahrzeugrahmens fest verbunden.

Gemäß Fig. 1 sind das Außenprofilteil 1, das Innenprofilteil 3 und das Zugbandprofilteil 2 über Schrauben 6 miteinander und mit dem strichpunktierten Längsträger des Rahmens des Fahrzeuges verbunden. Diese Schrauben 6 führen durch entsprechende Bohrungen im Längsträger des Rahmens, durch Distanzhülsen 4 in den Langlöchern 8 des Außenprofilteils 1 sowie durch die Schraubenaufnahmebohrungen, die an beiden Enden in Stoßrichtung des Innenprofilteils 3 ausgebildet sind. Zusammen mit einer Gegenmutter bilden die Schrauben 6 eine Verschraubung, die das Außenprofilteil 1 über eine gewisse Reibung fest mit dem Längsträger des Rahmens verbindet.

Der Außendurchmesser der Schäfte der Schrauben 6 ist kleiner als der Innendurchmesser der Schraubenaufnahmebohrungen des Innenprofilteils 3 sowie der eingesetzten Distanzhülsen 4 ausgebildet, was die Möglichkeit bietet, im Rahmen des dadurch gegebenen Spielraumes in Längsrichtung die gesamte Stoßverzehrvorrichtung gegenüber dem Fahrzeugrahmen einzustellen, um Rohbauteiltoleranzen auszugleichen.

Die Distanzhülsen 4 bestehen aus einem Fließpressteil oder aus Kunststoff, das Zugbandprofilteil 2 ist vorzugsweise aus einer Aluminiumlegierung mit hoher Bruchdehnung gebildet.

Wie es in Fig. 3 dargestellt ist, können die Langlöcher 8 mit langlochartigen Verlängerungen mit kleinerem Durchmesser am in Stoßrichtung vorderen Ende versehen sein, in denen die Distanzhülsen 4 und die Schrauben 6 im unbelasteten Zustand liegen. Wenn der verbreiterte Teil der Langlocher 8 so breit ist, daß in diesem Bereich die Distanzhülsen 4 nicht mehr am Außenprofilteil 1 anliegen, wenn die Schrauben 6 und die Distanzhülsen 4 im Kollisionsfall durch die Langlöcher 8 wandern, dann tritt in diesem Bereich keine nennenswerte Reibung zwischen dem Fahrzeuglängsträger und dem Außenprofil 1 auf. Im Gegensatz dazu tritt jedoch am Anfang des Weges der Schrauben 6 und der Distanzhülsen 4 durch die Langlöcher 8, d.h. am Beginn des Stoßverzehrvorganges, schon eine beträchtliche Reibung zwischen dem Fahrzeuglängsträger und dem Außenprofil 1 auf, da in diesem Bereich die Schrauben 6 den Fahrzeuglängsträger an das Außenprofilteil 1 bzw. die Distanzhülsen 4 drücken. Dadurch wird bewirkt, daß die Kraft-Weg-Kennlinie vorteilhafterweise zu Beginn steiler ansteigt, als es aufgrund nur der Dehnung des Zugbandprofilteiles 2 der Fall wäre.

In Fig. 6 ist ein weiteres Ausführungsbeispiel der erfindungsgemäßen Vorrichtung dargestellt, das gleichfalls so ausgebildet ist, daß die Kraft-Weg-Kennlinie zu Beginn des Stoßverzehrvorganges steiler ansteigt, da noch ein weiterer energieabsorbierender Mechanismus vorgesehen ist.

Gemäß Fig. 6 ist das Innenprofilteil 3 am in Stoßrichtung vorderen Ende da über eine stegartige Verbindung starr mit dem Außenprofilteil 1 verbunden. Zu Beginn des Stoßverzehrvorganges wird dieser Steg 3b des Innenprofilteils 3 gedehnt und schließlich abgerissen. Da der Steg 3b verglichen mit der Länge des Zugbandprofilteils 2 sehr kurz ist, zeigt er bei einer Dehnung einen viel steileren Kraft-Weg-Anstieg als das Zugbandprofil. Diese Steilheit kann durch die Wahl einer entsprechend festen Legierung für das Innenprofilteil 3 erhöht werden.

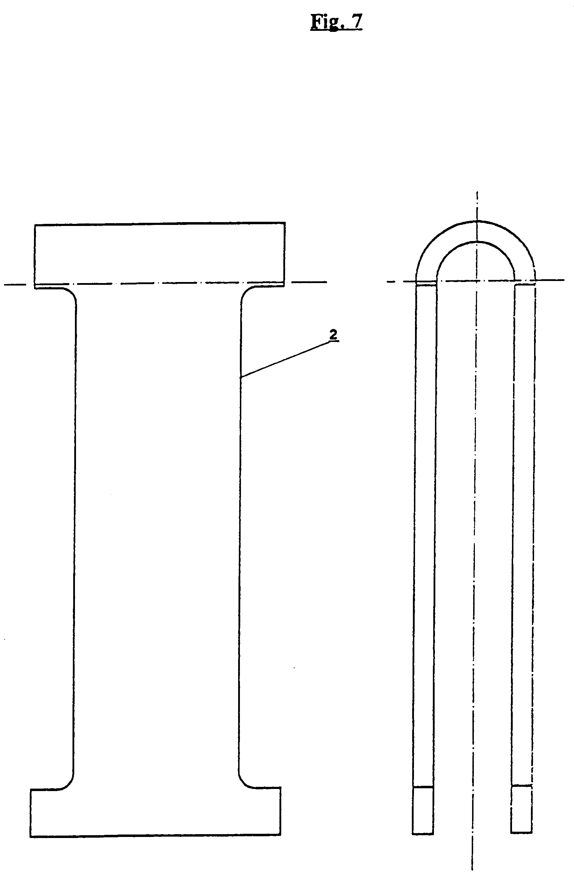

Gemäß Fig. 7 hat vorzugsweise das Zugbandprofilteil 2 an seinen Enden, an denen es am Außenprofilteil 1 befestigt ist, sowie im Krümmungsbereich, an dem es um das Innenprofilteil 3 herumgeführt ist, d.h. an den Stellen, an denen es mit den Profilteilen 1, 3 verbunden ist, eine größere Bandbreite als am übrigen Bereich. Dadurch kann ein vorzeitiges Reißen der Schweißnähte am Teil 3a des Innenprofilteils 3 oder an der Stelle, an der das Zugbandprofilteil 2 um das Innenprofilteil 3 herumgeführt ist, vermieden werden. Das Zugbandprofilteil kann aus Blech geformt sein.

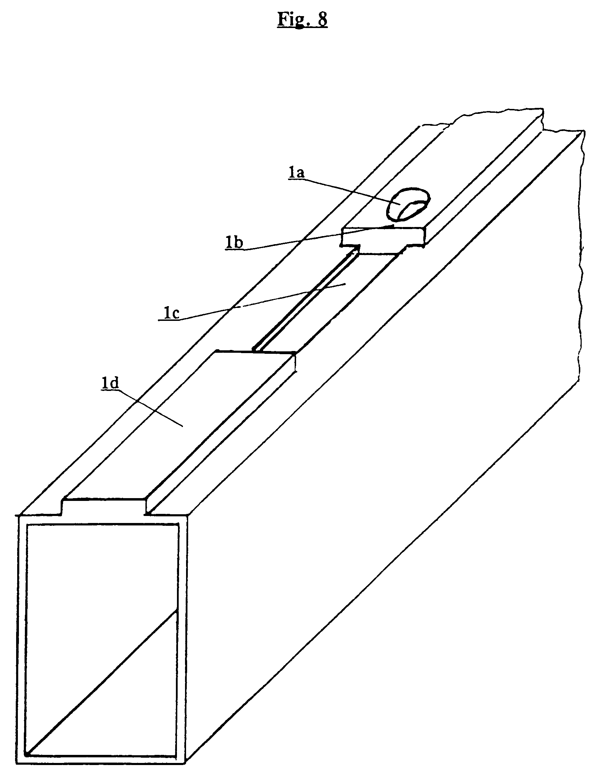

Fig. 8 zeigt ein weiteres Ausführungsbeispiel der erfindungsgemäßen Stoßverzehrvorrichtung, bei dem gleichfalls für einen steilen Anstieg der Kraft-Weg-Kennlinie am Anfang des Stoßverzehrvorganges gesorgt ist.

Wie es in Fig. 8 dargestellt ist, die die stoßaufnahmeseitige Hälfte des Außenprofilteils 1 zeigt, sind die Langlöcher 8 bei den bisherigen Ausführungsbeispielen, durch die die Schrauben 6 geführt sind, durch zwei insbesondere kreisrunde Bohrungen 1a und zwei breitere Schlitze 1c ersetzt, zwischen denen sich ein schmaler Steg 1b befindet. Die Wand des Außenprofilteils 1 kann an der Stelle, an der die Schrauben 6 hindurchgeführt werden, d.h. im Bereich der Bohrungen 1a, höher, d.h. stärker, ausgebildet sein, was über einen erhöhten Bereich 1d erfolgen kann.

Im montierten unbelasteten Zustand gehen die durch das Innenprofilteil führenden Schrauben 6 durch die Bohrungen 1a. Wenn im Einsatzfall, d.h. bei einem anliegenden Stoß, das Außenprofilteil 1 gegen die Schrauben 6 verschoben werden soll, so muß erst der Steg 1b durchgerissen werden, was zu dem steileren Kraftanstieg am Beginn des Verformungsvorganges führt.

Es ist jedoch auch möglich, ohne einen derartigen Steg 1b auszukommen. Dazu kann die Wand des Außenprofilteils 1, am Anfang des Schlitzes, durch den die Schraube 6 im Einsatzfall wandert, stärker als im übrigen Bereich, d.h. erhöht, ausgebildet sein. Dadurch wird erreicht, daß zu Beginn des Verformungsvorganges im Bereich der Schrauben 6 eine Reibung zwischen dem Fahrzeuglängsträger bzw. den Distanzhülsen 4 und dem Außenprofilteil 1 auftritt, wie es auch in Fig. 1 dargestellt ist. Wenn die Schrauben 6 jedoch in den Bereich kommen, in dem die Wand des Außenprofilteils dünner ausgebildet ist, d.h. die Erhöhung 1d fehlt, so daß sozusagen das Außenprofilteil 1 niedriger ist, dann wird der Fahrzeuglängsträger nicht mehr fest gegen das Außenprofilteil 1 angedrückt, so daß keine Reibung mehr hervorgerufen wird. Da bei dieser Ausbildung der Schlitz 1c schmaler gehalten werden kann, als es am breiten Teil des Langloches 8 bei den anderen Ausführungsbeispielen der Fall ist, ergibt sich eine bessere Führung, was insbesondere bei Stößen mit einer seitlichen Komponente vorteilhaft ist.

Die Montage der Stoßverzehrvorrichtung erfolgt derart, daß die Baugruppe aus Außenprofilteil 1, Innenprofilteil 3 und Zugbandprofilteil 2, die vorgefertigt werden kann, über die ohnehin erforderlichen Verschraubungen quer zum Längsträger des Rahmens montiert und in Längsrichtung in der erforderlichen Weise justiert wird. Danach werden die Schrauben 6 angezogen und kann gegebenenfalls der Stoßfänger an der Montageplatte 5 montiert werden. Die Stoßverzehrvorrichtung ist dann über eine Reibung infolge der Vorspannkraft der Schrauben 6 im Längsträger in der Montagelage gehalten.

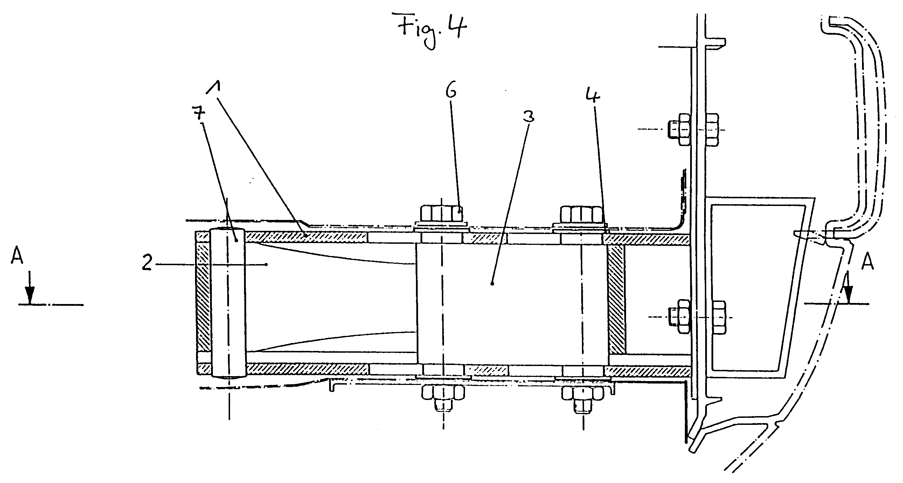

Im folgenden wird die Arbeitsweise des oben beschriebenen Ausführungsbeispiels der erfindungsgemäßen Stoßverzehrvorrichtung näher beschrieben:
Wenn in dem in Fig. 1 dargestellten Zustand beispielsweise aufgrund eines Aufpralls des Fahrzeugs auf einen Gegenstand ein Stoß am Stoßfänger liegt, der an der Montageplatte 5 des Außenprofilteils 1 fest montiert ist, dann werden die entsprechenden Kräfte über den Stoßfänger auf das Außenprofilteil 1 übertragen. Wie es in Fig. 4 dargestellt ist, verschiebt sich dann zunächst das Außenprofilteil 1 mit den Distanzhülsen 4, bis die Schrauben 6 am Innenumfang der Distanzhülsen 4 anliegen.

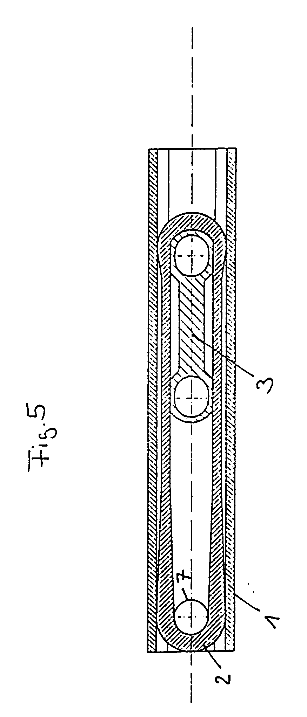

Da das Innenprofilteil 3 über die Distanzhülsen 4 und die Schrauben 6 fest am Längsträger des Kraftfahrzeugrahmens gehalten ist, während sich das Außenprofilteil 1 weiter verschiebt, wird anschließend das Zugbandprofilteil 2 gedehnt. Diese Dehnung erfolgt gemäß Fig. 5 von rechts nach links. Gemäß Fig. 5 bleibt das Innenprofilteil 3 relativ zum Längsträger des Kraftfahrzeugrahmens ortsfest, während sich das Außenprofilteil 1 weiter nach vorne verschiebt und dadurch das Zugbandprofilteil 2 über den Bolzen 7 dehnt.

In Abhängigkeit von dem gewählten Werkstoff des Zugbandprofilteils 2 ergibt sich ein Kraftwegverlauf, der dem σ-ε-Diagramm, d.h. dem Spannungs-Dehnungs-Diagramm, proportional ist. Der maximale Arbeitsweg oder Hub, d.h. die Strecke, um die das Zugbandprofilteil 2 gedehnt werden kann, ist durch die Länge der Langlöcher 8 im Außenprofilteil 1 bestimmt.

Um einen definierten Dehnungsbereich des Zugbandprofilteils 2 zu erreichen, sind gemäß Fig. 2 die parallel zum Außenprofilteil 1 und in Stoßrichtung verlaufenden Seitenwände des Zugbandprofilteils 2 dünner als die Endabschnitte des Zugbandprofilteils 2 ausgebildet, die um den Bolzen 7 bzw. um das Innenprofilteil 3 herumführen.

## Patentansprüche

1. Stoßverzehrvorrichtung zum Schützen eines Bauteils, insbesondere des Rahmens eines Fahrzeuges vor einem anliegenden Stoß mit
- einem Außen- und einem Innenprofilteil, die ineinander angeordnet sind, wobei
- eines der Profilteile den Stoß aufnimmt und unter der Einwirkung des Stoßes axial relativ zum anderen Profilteil bewegbar ist, und
- das andere Profilteil fest mit dem vor dem Stoß zu schützenden Bauteil verbunden ist, und
- einem Zugbandprofilteil (2), das in dem den Stoß aufnehmende Profilteil angeordnet und an seinem in Stoßrichtung vorderen Ende fest mit dem den Stoß aufnehmenden Profilteil und an seinem in Stoßrichtung hinteren Ende fest mit dem anderen Profilteil verbunden ist, dadurch gekennzeichnet, daß
- das den Stoß aufnehmende Profilteil (1) als Außenprofilteil ausgebildet ist und
- das Innenprofilteil (3) an wenigstens zwei Stellen mit dem vor dem Stoß zu schützenden Bauteil verbunden ist, die im Abstand voneinander und in einer Linie in axialer Hinsicht hintereinander liegen.

2. Stoßverzehrvorrichtung nach Anspruch 1, dadurch gekennzeichnet, daß das Zugbandprofilteil (2) an seinem in Stoßrichtung hinteren Ende um das Innenprofilteil (3) herumgeführt ist.

3. Vorrichtung nach Anspruch 1 oder 2, dadurch gekennzeichnet, daß im Außenprofilteil (1) in Stoßrichtung verlaufende Langlöcher (8) ausgebildet sind und Schrauben (6) durch Bohrungen in dem zu schützenden Bauteil, durch die Langlöcher (8) im Außenprofilteil (1) und durch Schraubenaufnahmebohrungen im Innenprofilteil (3) führen, die diese Bauteile miteinander verbinden.

4. Vorrichtung nach Anspruch 3, dadurch gekennzeichnet, daß die Langlöcher (8) am in Stoßrichtung vorderen Ende eine Langlochverlängerung mit kleinerem Durchmesser aufweisen, in der die Schrauben (6) in unbelastetem Zustand der Vorrichtung sitzen.

5. Vorrichtung nach Anspruch 3 oder 4, dadurch gekennzeichnet, daß der Durchmesser der Schrauben (6) kleiner als der Innendurchmesser der Schraubenaufnahmebohrungen im Innenprofilteil (3) ist.

6. Vorrichtung nach Anspruch 3, 4 oder 5, gekennzeichnet durch Distanzhülsen (4), die in den Langlöchern (8) des Außenprofilteils (1) und in den Schraubenaufnahmebohrungen des Innenprofilteils (3) sitzen und in denen die Schrauben (6) aufgenommen sind.

7. Vorrichtung nach Anspruch 1, dadurch gekennzeichnet, daß das Zugbandprofilteil (2) über einen Bolzen (7) fest im Außenprofilteil (1) sitzt, der an der Innenseite des in Stoßrichtung vorderen Endes des Zugbandprofilteils (2) angeordnet und fest mit dem Außenprofilteil (1) verbunden ist.

8. Vorrichtung nach einem der vorhergehenden Ansprüche, dadurch gekennzeichnet, daß das Zugbandprofilteil (2) an seinen in Stoßrichtung verlaufenden Seitenteilen dünner als an den Endabschnitten ausgebildet ist.

9. Vorrichtung nach Anspruch 1, dadurch gekennzeichnet, daß das Innenprofilteil (3) am in Stoßrichtung vorderen Ende über eine Abrißverbindung mit dem Außenprofilteil (1) verbunden ist.

10. Vorrichtung nach Anspruch 9, dadurch gekennzeichnet, daß die Abrißverbindung aus einem Verbindungssteg (3b) besteht.

11. Vorrichtung nach einem der vorhergehenden Ansprüche, dadurch gekennzeichnet, daß das Zugbandprofilteil (2) an den Stellen, an denen es mit dem Innenprofilteil (3) und dem Außenprofilteil (1) verbunden ist, eine größere Bandbreite als im übrigen Bereich hat.

12. Vorrichtung nach Anspruch 1, dadurch gekennzeichnet, daß im Außenprofilteil (1) in Stoßrichtung verlaufende Schlitze (1c) und in Stoßrichtung vor den Schlitzen (1c) liegende Bohrungen (1a) jeweils ausgebildet sind, und das Innenprofilteil (3) über Schrauben (6) an dem zu schützenden Bauteil befestigt ist, die durch die vor den Schlitzen (1c) liegenden Bohrungen (1a) führen.

13. Vorrichtung nach Anspruch 12, dadurch gekennzeichnet, daß das Außenprofilteil (1) im Bereich der Bohrungen (1a) stärker als im übrigen Bereich ausgebildet ist.

14. Vorrichtung nach Anspruch 3, dadurch gekennzeichnet, daß der Bereich des Außenprofilteils (1) am in Stoßrichtung vorderen Ende des Langloches (8) verstärkt ausgebildet ist.

## Claims

1. An impact shock absorbing device for protecting a component in particular the chassis of a motor vehicle against a prevailing impact comprising
- an outer and an inner profiled part, which parts are disposed within each other, wherein
- one of the profiled parts absorbs the impact and under the influence of the impact can move axially relative to the other profiled part, and
- the other profiled part is fixedly connected to the component being protected against the impact, and
- a tension member profiled part (2) which is disposed in the profiled part absorbing the impact and at its, in the direction of impact, front end is fixedly connected to the profiled part absorbing the impact and at its, in the direction of impact, rear end is fixedly connected to the other profiled part, characterised in that
- the profiled part (1) absorbing the impact is formed as the outer profiled part and
- the inner profiled part (3) is connected at least at two sites to the component being protected against the impact, which sites are at spaced disposition to each other and lie behind each other in a line in the axial direction.

2. An impact shock absorbing device according to claim 1, characterised in that the tension member profiled part (2) is arranged at its, in the direction of impact, rear end around the inner profiled part (3).

3. A device according to claim 1 or 2, characterised in that in the outer profiled part (1) are formed elongated holes (8) which extend in the direction of impact and screws (6) extend through the bores in the component being protected, through the elongated holes (8) in the outer profiled part (1) and through the screw receiving bores in the inner profile part (3), which screws connect these components to each other.

4. A device according to claim 3, characterised in that the elongated holes (8) comprise at the, in the direction of impact, front end an elongated hole extension having a smaller diameter, in which the screws (6) sit in the unstressed state of the device.

5. A device according to claim 3 or 4, characterised in that the diameter of the screws (6) is smaller than the inner diameter of the screw receiving bores in the inner profiled part (3).

6. A device according to claim 3, 4 or 5 characterised by virtue of spacer sleeves (4) which sit in the elongated holes (8) of the outer profiled part (1) and in the screw receiving bores of the inner profiled part (3) and in which the screws (6) are received.

7. A device according to claim 1, characterised in that the tension member profiled part (2) sits by way of a pin (7) fixedly in the outer profiled part (1) which is arranged at the inner side of the, in the direction of impact, front end of the tension member profiled part (2) and is fixedly connected to the outer profiled part (1).

8. A device according to any of the preceding claims, characterised in that the tension member profiled part (2) is thinner at its lateral parts extending in the direction of impact than at the end portions.

9. A device according to claim 1, characterised in that the inner profiled part (3) is connected at the, in the direction of impact, front end by way of a tear-off connection to the outer profiled part (1).

10. A device according to claim 9, characterised in that the tear-off connection consists of a connection cross-piece (3b).

11. A device according to any one of the preceding claims, characterised in that the tension member profiled part (2) is broader at the sites, at which it is connected to the inner profiled part (3) and the outer profiled part (1), than in the remaining region.

12. A device according to claim 1, characterised in that in the outer profiled part (1) are formed in each case slots (1c) which extend in the direction of impact and bores (1a) which lie in the direction of impact in front of the slots (1c) and the inner profiled part (3) is attached by way of screws (6) to the component being protected, which screws extend through the bores (1a) lying in front of the slots (1c).

13. A device according to claim 12, characterised in that the outer profiled part (1) is stronger in the region of the bores (1a) than in the remaining region.

14. A device according to claim 3, characterised in that the region of the outer profiled part (1) is reinforced at the, in the direction of impact, front end of the elongated hole (8).

## Revendications

1. Dispositif d'absorption d'énergie pour protéger un élément de construction, notamment le châssis d'un véhicule, d'un choc appliqué sur cet élément,
- comprenant un élément profilé extérieur et un élément profilé intérieur, qui sont disposés l'un dans l'autre,
- un des éléments profilés recevant le choc et pouvant, sous l'action du choc, être déplacé axialement par rapport à l'autre élément profilé,
- et l'autre élément profilé étant assemblé de manière fixe à l'élément de construction à protéger du choc,
- et comprenant un élément profilé de traction (2), qui est disposé dans l'élément profilé recevant le choc et qui est assemblé de manière fixe à ce dernier par son extrémité avant dans la direction de choc, tandis que, par son extrémité arrière dans la direction de choc, il est assemblé de manière fixe à l'autre élément profilé,
**caractérisé** en ce que
- l'élément profilé (1) recevant le choc est conçu comme élément profilé extérieur, et
- l'élément profilé intérieur (3) est assemblé à l'élément de construction à protéger du choc en au moins deux endroits, qui sont situés à distance l'un de l'autre et alignés l'un derrière l'autre en vue axiale.

2. Dispositif d'absorption d'énergie selon la revendication 1, **caractérisé** en ce que l'élément profilé de traction (2) est, à son extrémité arrière dans la direction de choc, guidé tout autour de l'élément profilé intérieur (3).

3. Dispositif selon la revendication 1 ou 2, **caractérisé** en ce que des trous oblongs (8) s'étendant dans la direction de choc sont configurés dans l'élément profilé extérieur (1), et des boulons (6) passent par des perçages dans l'élément de construction à protéger, par les trous oblongs (8) dans l'élément profilé extérieur (1) et par des perçages de réception de boulon dans l'élément profilé intérieur (3), boulons qui assemblent ces éléments entre eux.

4. Dispositif selon la revendication 3, **caractérisé** en ce que les trous oblongs (8) présentent, à l'extrémité avant dans la direction de choc, un prolongement de trou oblong de plus petit diamètre, dans lequel sont placés les boulons (6) à l'état non sollicité du dispositif.

5. Dispositif selon la revendication 3 ou 4, **caractérisé** en ce que le diamètre des boulons (6) est inférieur au diamètre intérieur des perçages de réception de boulon dans l'élément profilé intérieur (3).

6. Dispositif selon la revendication 3, 4 ou 5, **caractérisé** par des douilles d'écartement (4), qui sont montées dans les trous oblongs (8) de l'élément profilé extérieur (1) et dans les perçages de réception de boulon de l'élément profilé intérieur (3) et dans lesquelles sont reçus les boulons (6).

7. Dispositif selon la revendication 1, **caractérisé** en ce que l'élément profilé de traction (2) est monté de manière fixe dans l'élément profilé extérieur (1) au moyen d'un goujon (7), qui est disposé contre le côté intérieur de l'extrémité avant, dans la direction de choc, de l'élément profilé de traction (2) et qui est assemblé de manière fixe à l'élément profilé extérieur (1)

8. Dispositif selon l'une des revendications précédentes, **caractérisé** en ce que l'élément profilé de traction (2) est réalisé plus mince sur ses parties latérales, s'étendant dans la direction de choc, que sur ses parties terminales.

9. Dispositif selon la revendication 1, **caractérisé** en ce que l'élément profilé intérieur (3) est, à l'extrémité avant dans la direction de choc, assemblé à l'élément profilé extérieur (1) au moyen d'une liaison pouvant être rompue.

10. Dispositif selon la revendication 9, **caractérisé** en ce que la liaison pouvant être rompue consiste en une nervure de liaison (3b).

11. Dispositif selon l'une des revendications précédentes, **caractérisé** en ce que l'élément profilé de traction (2) présente, aux endroits où il est assemblé à l'élément profilé intérieur (3) et à l'élément profilé extérieur (1), une plus grande largeur de bande qu'ailleurs.

12. Dispositif selon la revendication 1, **caractérisé** en ce que des fentes (1c) s'étendant dans la direction de choc et des perçages (1a) situés devant les fentes (1c) dans la direction de choc sont respectivement configurés dans l'élément profilé extérieur (1), et l'élément profilé intérieur (3) est fixé à l'élément de construction à protéger au moyen de boulons (6) qui passent par les perçages (1a) situés devant les fentes (1c).

13. Dispositif selon la revendication 12, **caractérisé** en ce que l'élément profilé extérieur (1) est réalisé, dans la région des perçages (1a), plus épais qu'ailleurs.

14. Dispositif selon la revendication 3, **caractérisé** en ce que l'élément profilé extérieur (1) est renforcé dans la région de l'extrémité avant, dans la direction de choc, du trou oblong (8).
